# EUROPÄISCHE PATENTANMELDUNG

(11) **EP 2 562 049 A1**
(43) Veröffentlichungstag der Anmeldung: **27.02.2013**
(21) Anmeldenummer: 12180011.4
(22) Anmeldetag: 10.08.2012
(51) Int. Cl.: B60R 11/00

(54) **Befestigungsvorrichtung für ein Anzeigegerät**

(30) Priorität: 25.08.2011 DE 202011104834 U
(71) Anmelder: Vantecc GmbH, 71116 Gärtringen (DE)
(72) Erfinder: Langer, Claus, 71116 Gärtringen (DE); Zdrahal, Sascha, 71272 Renningen (DE)
(74) Vertreter: Kohler Schmid Möbus

(57) **Zusammenfassung**

Eine Befestigungsvorrichtung (10) für ein Anzeigegerät (1) im Innenraum eines Kraftfahrzeugs, die zwei beidseitig der Kugel (1) des Innenspiegelhalters (20) des Fahrzeugs anordenbaren und miteinander verspannbaren Hälften (11, 12) aufweist.

## Beschreibung

Die Erfindung betrifft eine Befestigungsvorrichtung für ein Anzeigegerät im Innenraum eines Kraftfahrzeugs, um das Bild eines Videogerätes, einer Rückfahrkamera oder eines Sensors anzuzeigen.

Aus der WO 2009/000987 ist eine Haltevorrichtung für ein Anzeigegerät bekannt, die über einen Haken am Auslegearm des Innenspiegels befestigt wird. Das Anzeigegerät selbst befindet sich unterhalb des Innenspiegels. Dadurch wird jedoch die Sicht des Fahrers nach vorne deutlich eingeschränkt. Außerdem wird der Haltearm des Innenspiegels und dessen Befestigung am Kraftfahrzeug durch das Mehrgewicht des Halters und des Anzeigegerätes zusätzlich belastet.

Die DE 20 2006 015 021 U1 beschreibt ein Rückspiegelgehäuse, das über einen ausfahrbaren Monitor verfügt. Dieses Gehäuse wird auf einen vorhandenen Innenspiegel montiert. Auch hier ergibt sich eine Einschränkung der Sicht des Fahrers und eine deutliche Mehrbelastung der Halterung des Innenspiegels.

Weiter beschreibt die WO 2008/025324 A1 ein Spiegelgehäuse, das über einen internen, ausfahrbaren Monitor verfügt. Diese Lösung weist den Nachteil auf, dass der Monitor sehr klein ist, um ihn im Spiegelgehäuse integrieren zu können.

Darüber hinaus sind Halterungen für Anzeigegeräte bekannt, die auf den vorhandenen Innenspiegel aufgesteckt oder mit Haltebändern befestigt werden. Auch bei diesen Lösungen ergeben sich die oben beschriebenen Nachteile.

Der vorliegenden Erfindung liegt die Aufgabe zugrunde, eine Befestigungsvorrichtung für ein Anzeigegerät bereitzustellen, die eine Beeinträchtigung der Sicht des Fahrers vermeidet und die Halterung des Innenspiegels weniger belastet als bekannte Lösungen.

Die Aufgabe wird gelöst durch eine Befestigungsvorrichtung für ein Anzeigegerät im Innenraum eines Kraftfahrzeugs, die gekennzeichnet ist durch zwei beidseitig der Kugel des Innenspiegelhalters des Fahrzeugs anordenbaren und miteinander verspannbaren Hälften.

Bei der erfindungsgemäßen Befestigungsvorrichtung wird also der Innenspiegel vollständig ersetzt durch die Befestigungsvorrichtung mit dem Anzeigegerät. Dadurch ergibt sich keine zusätzliche Beeinträchtigung der Sicht des Fahrers nach vorne. Außerdem wird der Innenspiegelhalter nur mit dem Gewicht der Befestigungsvorrichtung und dem Anzeigegerät, nicht aber auch durch das Gewicht des Innenspiegels belastet.

Da Kraftfahrzeuge mit unterschiedlichen Innenspiegeln ausgestattet sind, variieren auch die Innenspiegelhalter. Insbesondere die Durchmesser der Kugeln, die nahezu alle Halter aufweisen, ist bei verschiedenen Fahrzeugtypen unterschiedlich. Vorzugsweise kann daher jede der Hälften eine Aussparung für die Kugel des Innenspiegelhalters aufweisen, in die unterschiedliche Einsätze zur Anpassung an unterschiedliche Kugeldurchmesser des Innenspiegelhalters einsetzbar sind. Zur Anpassung der Befestigungsvorrichtung an unterschiedliche Innenspiegelhalter ist also nur ein Austausch dieser Einsätze erforderlich. Die Befestigungsvorrichtung kann daher auch zusammen mit mehreren Einsätzen geliefert werden, wobei sich der Kunde dann diejenigen Einsätze aussucht, die zum Kugeldurchmesser seiner Innenspiegelhalterung passen. Die Einsätze sind vorzugsweise formschlüssig zur Kugel des Innenspiegelhalters gestaltet, sodass das Anzeigegerät wie der Innenspiegel auf der Kugel verstellt werden kann, um dem Fahrer des Fahrzeugs eine optimale Sicht auf das Anzeigegerät zu erlauben.

Vorzugsweise können die beiden Hälften der Befestigungsvorrichtung mittels Schrauben miteinander verspannbar sein. Durch die unterschiedlich großen Kugeldurchmesser ist der gegenseitige Abstand der beiden Hälften nach der Montage der Befestigungsvorrichtung je nach Fahrzeug unterschiedlich. Dieser unterschiedliche gegenseitige Abstand der Hälften kann am besten mittels Schrauben eingestellt werden.

Dabei ist es von besonderem Vorteil, wenn mindestens eine der Schrauben entgegen der Kraft einer Feder anziehbar ist. Die Federn sorgen für die Spannwirkung der Anordnung und erlauben gleichzeitig ein Verschwenken des Anzeigegerätes auf der Kugel des Innenspiegelhalters.

Bei einer bevorzugten Ausführungsform ist eine der Hälften fest mit dem Anzeigegerät verbunden. In dieser Hälfte können auch die Schrauben unverlierbar gehalten sein. Auf diese Weise ist die gesamte Befestigungsvorrichtung lediglich zweiteilig, wenn man von den auswechselbaren Einsätzen absieht. Dadurch wird die Befestigungsvorrichtung insgesamt sehr einfach zu handhaben.

Als Anzeigegeräte kommen unterschiedliche Einrichtungen in Betracht. Vorzugweise ist das Anzeigegerät jedoch ein Monitor, auf dem Bilder einer Kamera, eines Sensors oder eines Videogerätes darstellbar sind.

Nachfolgend wird ein bevorzugtes Ausführungsbeispiel einer erfindungsgemäßen Befestigungsvorrichtung anhand der Zeichnung näher beschrieben.

Es zeigen:
- Fig. 1: einen schematischen Längsschnitt durch eine Befestigungsvorrichtung mit Anzeigegerät;
- Fig. 2: einen Schnitt entlang der Linie II-II durch die Befestigungsvorrichtung aus Fig. 1.

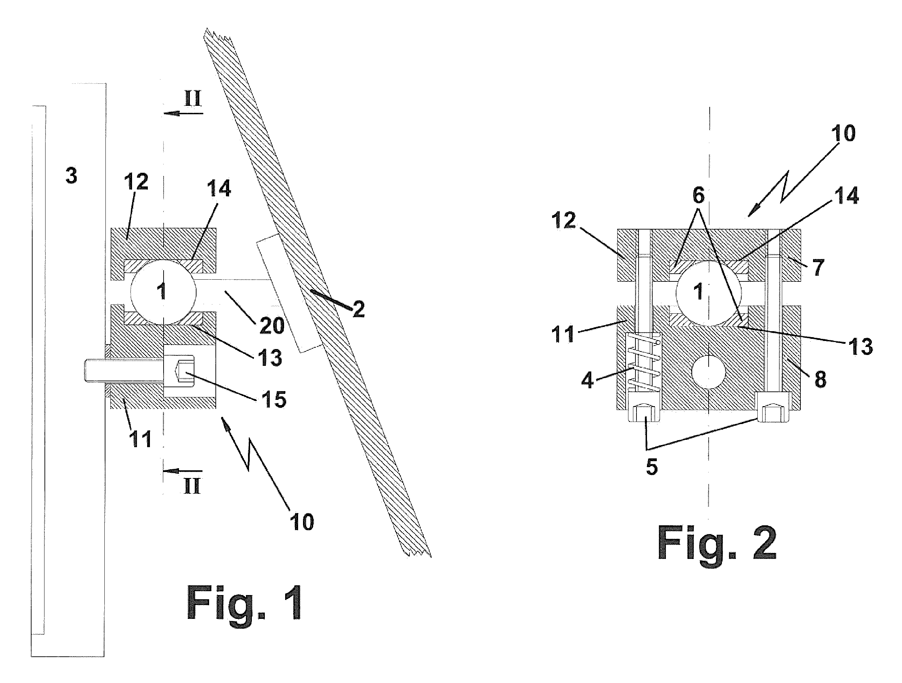

Gemäß Fig. 1 ist die erfindungsgemäße Befestigungsvorrichtung 10 an der Kugel 1 eines Innenspiegelhalters 20 angeordnet. Der Innenspiegelhalter 20 selbst ist an einer Windschutzscheibe 2 eines ansonsten nicht näher dargestellten Fahrzeugs befestigt. Die Befestigungsvorrichtung 10 weist zwei Hälften 11 und 12 auf, die die Kugel 1 unter- bzw. übergreifen. Dazu weist jede der Hälften 11, 12 eine Aussparung 13, 14 auf, in die jeweils Einsätze 6 (Fig. 2) eingefügt sind, die an die Form und insbesondere an den Durchmesser der Kugel 1 angepasst sind. Die Einsätze 6 können ausgetauscht werden, um die Befestigungsvorrichtung 10 auch an Innenspiegelhaltern 20 mit anderen Kugeldurchmessern befestigen zu können. An der unteren Hälfte 11 der Befestigungsvorrichtung 10 ist ein Anzeigegerät, hier ein Monitor 3, mittels einer Schraube 15 befestigt. Die erfindungsgemäße Befestigungsvorrichtung 10 ermöglicht somit eine Befestigung des Monitors oder eines anderen Anzeigegeräte anstelle des Innenspiegels an einem Innenspiegelhalter 20 eines Fahrzeugs.

Aus dem Querschnitt durch die Befestigungsvorrichtung 10 gemäß Fig. 2 ist zu erkennen, dass die beiden Hälften 11 und 12 mittels Schrauben 5 miteinander verspannt sind. Dadurch wird ein sicherer Sitz des Monitors 3 auf der Innenspiegelhalterung 20 gewährleistet. Dabei ist mindestens eine der Schrauben 5 entgegen der Kraft einer Druckfeder 4 anziehbar. Die Druckfeder 4 sorgt dafür, dass der Monitor 3 auf der Kugel 1 ähnlich wie der Innenspiegel, der gewöhnlich auf der Halterung 20 montiert ist, gedreht werden kann. Dadurch kann sich der Fahrer des Fahrzeugs den Monitor so einstellen, dass er ihn leicht und bequem betrachten kann. Die Einsätze 6 umgreifen die Kugel 1 dabei formschlüssig. Sie können in die Aussparungen 13, 14 eingeklebt oder anderweitig befestigt werden.

## Patentansprüche

1. Befestigungsvorrichtung für ein Anzeigegerät (3) im Innenraum eines Kraftfahrzeugs, **gekennzeichnet durch** zwei beidseitig der Kugel (1) des Innenspiegelhalters (20) des Fahrzeugs anordenbaren und miteinander verspannbaren Hälften (11, 12).

2. Befestigungsvorrichtung nach Anspruch 1, **dadurch gekennzeichnet, dass** jede der Hälften (11, 12) eine Aussparung (13, 14) für die Kugel (1) des Innenspiegelhalters (20) aufweist, in die unterschiedliche Einsätze (6) zur Anpassung an unterschiedliche Kugeldurchmesser des Innenspiegelhalters (20) einsetzbar sind.

3. Befestigungsvorrichtung nach Anspruch 1 oder 2, **dadurch gekennzeichnet, dass** die beiden Hälften (11, 12) mittels Schrauben (5) miteinander verspannbar sind.

4. Befestigungsvorrichtung nach Anspruch 3, **dadurch gekennzeichnet, dass** mindestens eine der Schrauben (5) entgegen der Kraft einer Feder (4) anziehbar ist.

5. Befestigungsvorrichtung nach einem der Ansprüche 1 bis 4, **dadurch gekennzeichnet, dass** eine der Hälften (11) fest mit dem Anzeigegerät (3) verbunden ist.

6. Befestigungsvorrichtung nach einem der Ansprüche 1 bis 5, **dadurch gekennzeichnet, dass** das Anzeigegerät ein Monitor (3) ist.
